# EUROPEAN PATENT APPLICATION

(11) **EP 4 742 375 A1**
(43) Date of publication of application: **13.05.2026**
(21) Application number: 24881400.6
(22) Date of filing: 09.10.2024
(51) Int. Cl.: H01M 10/6556, H01M 10/655, H01M 10/60, H01M 10/613, H01M 10/617

(54) **CURRENT COLLECTING COMPONENT, THERMAL MANAGEMENT ASSEMBLY, BATTERY, AND ELECTRIC DEVICE**

(30) Priority: 23.10.2023 CN 202311377386
(71) Applicant: Contemporary Amperex Technology Co., Limited, Ningde, Fujian 352100 (CN)
(72) Inventor: SONG, Feiting, Ningde, Fujian 352100 (CN); TANG, Yu, Ningde, Fujian 352100 (CN); HUANG, Xiaoteng, Ningde, Fujian 352100 (CN)
(74) Representative: Kraus & Lederer PartGmbB
(86) International application number: PCT/CN2024/123556
(87) International publication number: WO 2025/087034

(57) **Abstract**

A fluid collecting component (3), a thermal management assembly (30), a battery (100), and an electric apparatus are provided. The fluid collecting component (3) includes an apparatus body (31), where the apparatus body (31) is provided with a main inlet (311), a main outlet (312), a plurality of branch inlets (313), and a plurality of branch outlets (314), where the plurality of branch outlets (314) are in communication with the main outlet (312); an extension flow channel (315) is formed inside the apparatus body (31); one end of the extension flow channel (315) is in communication with the main inlet (311), and the other end thereof extends toward a side away from the main inlet (311); one of the plurality of branch inlets (313) are in communication with the main inlet (311), and the others are in communication with the extension flow channel (315); the number of the branch inlets (313) is equal to the number of the branch outlets (314), and the branch inlets (313) are in one-to-one correspondence to the branch outlets (314); and the branch inlets (313) are adjacent to the corresponding branch outlets (314).

## Description

### CROSS-REFERENCE TO RELATED APPLICATIONS

This application is based on Chinese Patent Application No. 202311377386.3, filed on October 23, 2023, and claims priority to the Chinese Patent Application, which is incorporated herein by reference in its entirety.

### TECHNICAL FIELD

This application relates to the field of battery technology, and in particular, to a fluid collecting component, a thermal management assembly, a battery, and an electric apparatus.

### BACKGROUND

In recent years, new energy vehicles have undergone rapid development. In the field of electric vehicles, traction batteries, as traction sources of electric vehicles, play an irreplaceable and important role. A battery includes a box and a plurality of battery cells accommodated in the box. As a core component of new energy vehicles, the battery has high requirements in terms of safety and service life. Battery cells in the battery generate a large amount of heat during continuous charging and discharging, resulting in a sharp rise in the internal temperature of the battery, thus seriously affecting the reliability of the battery.

### SUMMARY

Embodiments of this application provide a fluid collecting component, a thermal management assembly, a battery, and an electric apparatus, which can effectively improve the reliability of the battery.

According to a first aspect, an embodiment of this application provides a fluid collecting component including an apparatus body, where the apparatus body is provided with a main inlet, a main outlet, a plurality of branch inlets, and a plurality of branch outlets; the plurality of branch outlets are in communication with the main outlet; an extension flow channel is formed inside the apparatus body; one end of the extension flow channel is in communication with the main inlet, and the other end thereof extends toward a side away from the main inlet; one of the plurality of branch inlets are in communication with the main inlet, and the others are in communication with the extension flow channel; the number of the branch inlets is equal to the number of the branch outlets, and the branch inlets are in one-to-one correspondence to the branch outlets; and the branch inlets are adjacent to the corresponding branch outlets.

According to the fluid collecting component of this embodiment of this application, the apparatus body is provided with the plurality of branch inlets and the plurality of branch outlets, so that the fluid collecting component can be in communication with a plurality of thermal management components, and the temperature inside the battery can be controlled through the plurality of thermal management components. This can reduce the probability of a large temperature difference occurring in the battery, improve the temperature uniformity of the battery, reduce the probability of a sharp rise in the temperature of the battery, and improve the reliability of the battery. Moreover, the plurality of branch inlets can be in communication with the main inlet through the extension flow channel, and the branch inlets are adjacent to the corresponding branch outlets, so that the plurality of branch inlets can be arranged in a dispersed manner. This is conducive to reducing the probability of installation interference among the plurality of thermal management components, reducing the occurrence of the thermal management components needing to be bent for avoidance, maintaining the overall flatness of the thermal management components, and reducing the large space occupied by the thermal management components.

In some embodiments of this application, the extension flow channel extends along a length direction of the apparatus body; and the plurality of branch outlets are provided on a same side of the apparatus body in the length direction.

In the above technical solution, the extension flow channel extends along the length direction of the apparatus body, so that the extension flow channel is a linear flow channel. This is conducive to reducing the flow resistance in the extension flow channel and reducing the flow velocity loss of a refrigerant. The plurality of branch outlets are provided on a same side of the apparatus body, which is conducive to providing the plurality of thermal management components on the same side of the apparatus body, thereby allowing the position layout of the plurality of thermal management components to be relatively compact, reducing the size of the thermal management assembly in a second direction, and further reducing the space occupied by the thermal management assembly.

In some embodiments of this application, at least part of the plurality of branch inlets and the branch outlets are provided on a same side of the apparatus body.

In the above technical solution, in the plurality of thermal management components, for a thermal management component connected to the branch inlet and the branch outlet on the same side, a distance between two ends of a pipeline of the thermal management component may be relatively short, which is conducive to reducing the length of the thermal management component, reducing the material of the thermal management component, and reducing the cost. Meanwhile, an end space of the apparatus body in a first direction does not need to be connected to the thermal management component, and there is relatively sufficient space for arranging other components.

In some embodiments of this application, part of the plurality of branch inlets and the corresponding branch outlets are provided on two adjacent sides of the apparatus body.

In the above technical solution, part of the plurality of branch inlets and the corresponding branch outlets are provided on two adjacent sides of the apparatus body, and the others and the corresponding branch outlets are provided on a same side of the apparatus body. With this solution, the branch inlets and the corresponding branch outlets are provided on the same side, which can make two ends of the corresponding thermal management component close to each other, and is conducive to reducing the length of the thermal management component and reducing the material of the thermal management component. Meanwhile, the end space of the apparatus body in the first direction does not need to be connected to the thermal management component, which is conducive to avoiding other components of the battery, thereby facilitating the installation of other components. In addition, the branch inlets and the corresponding branch outlets are provided on two adjacent sides, and the apparatus body can discharge the refrigerant at the end in the first direction. This is conducive to reducing the size of the apparatus body in the first direction, reducing the material of the apparatus body, and reducing the cost.

In some embodiments of this application, the apparatus body has a height direction; a first communication flow channel is formed between the branch outlet and the main outlet; and the first communication flow channel and the extension flow channel are spaced apart in the height direction.

In the above technical solution, it can be understood that the first communication flow channel and the extension flow channel are arranged in layers in the height direction of the apparatus body. With this solution, the probability of interference between the first communication flow channel and the extension flow channel can be reduced, which is conducive to improving the manufacturability of the apparatus body, and reducing the size of the apparatus body in the second direction, thereby reducing the volume of the apparatus body, reducing the space occupied by the fluid collecting component, allowing for more space in the battery to arrange other components, or increasing the energy density of the battery.

In some embodiments of this application, a reference plane perpendicular to the height direction is made; and an orthographic projection of the extension flow channel at least partially overlaps with an orthographic projection of the first communication flow channel on the reference plane.

In the above technical solution, the orthographic projection of the extension flow channel at least partially overlaps with the orthographic projection of the first communication flow channel on the reference plane, so that the size of the apparatus body in the second direction can be further reduced, thereby reducing the space occupied by the fluid collecting component, allowing for more space in the battery to arrange other components, and further increasing the energy density of the battery.

In some embodiments of this application, a second communication flow channel is formed between the main inlet and the one of the plurality of branch inlets that is in communication with the main inlet; and the second communication flow channel and the extension flow channel are located on two sides of the main inlet.

In the above technical solution, providing the second communication flow channel and the extension flow channel on two sides of the main inlet can reduce the influence between the refrigerant flowing to an inlet of the second communication flow channel and the refrigerant flowing to an inlet of the extension flow channel, allowing the refrigerant entering the main inlet to be relatively evenly distributed to the second communication flow channel and the extension flow channel, and reducing the probability that refrigerant flow velocities of the plurality of branch inlets differ greatly due to uneven distribution of the refrigerant, thereby reducing the probability that the battery has a large temperature difference due to different refrigerant flow velocities of the plurality of thermal management components, and helping to improve the temperature control effect on the battery and improve the reliability of the battery.

In some embodiments of this application, the apparatus body has a width direction; a first communication flow channel is formed between the branch outlet and the main outlet; and the first communication flow channel and the extension flow channel are spaced apart along the width direction.

In the above technical solution, the first communication flow channel and the extension flow channel are spaced apart along the width direction, so that the size of the apparatus body in the height direction can be reduced, that is, the size of the fluid collecting component in the height direction can be reduced, thereby facilitating the reduction of the space occupied by the fluid collecting component in the height direction of the battery. With this solution, there may be sufficient space in the height direction inside the battery to arrange more components or larger-volume components. With this solution, the size of the battery in the height direction can also be reduced, thereby reducing the volume of the battery, and helping to increase the energy density of the battery.

In some embodiments of this application, a second communication flow channel is formed between the main inlet and the one of the plurality of branch inlets that is in communication with the main inlet; and the second communication flow channel is provided on a side of the main inlet away from the main outlet and is in communication with the extension flow channel.

In the above technical solution, the refrigerant of the main inlet first flows to the second communication flow channel, part of the refrigerant in the second communication flow channel flows to the branch inlet, and the other part flows to the extension flow channel. With this solution, the second communication flow channel is in communication with the extension flow channel and the branch inlet, so that the structure of the apparatus body is relatively simple, thereby improving the manufacturability of the apparatus body and reducing the cost.

In some embodiments of this application, the apparatus body has a height direction; a second communication flow channel is formed between the main inlet and the one of the plurality of branch inlets that is in communication with the main inlet; the main inlet is in communication with the second communication flow channel along the height direction; a reference plane perpendicular to the height direction is made; and an orthographic projection of the main inlet at least partially overlaps with an orthographic projection of the second communication flow channel on the reference plane.

In the above technical solution, the orthographic projection of the main inlet at least partially overlaps with the orthographic projection of the second communication flow channel on the reference plane, allowing the position distribution between the main inlet and the second communication flow channel to be relatively compact, and reducing the size of the apparatus body in the first direction, thereby reducing the space occupied by the fluid collecting component in the battery, allowing for a larger space in the first direction of the battery to arrange components, reducing the volume of the battery, and increasing the energy density of the battery.

In some embodiments of this application, one of the plurality of branch inlets is in communication with the main inlet, and a second communication flow channel is formed between the one of the plurality of branch inlets and the main inlet; the second communication flow channel and the extension flow channel are located on two sides of the main inlet; a first communication hole is formed between the extension flow channel and the main inlet; a second communication hole is formed between the second communication flow channel and the main inlet; and an opening area of the first communication hole is S1, and an opening area of the second communication hole is S2, where 0.5 ≤ S1/S2 ≤ 1.5.

In the above technical solution, setting the ratio of the opening area S1 of the first communication hole to the opening area S2 of the second communication hole in the range of 0.5 to 1.5 allows the pressure drop difference between the first communication hole and the second communication hole to fall within a suitable range, reducing the probability of a large pressure drop difference between the first communication hole and the second communication hole, thereby achieving the effect of regulating the refrigerant flow rate, and allowing the refrigerant to be evenly distributed to the plurality of branch inlets. In addition, with this solution, the refrigerant can be evenly distributed between the first communication hole and the second communication hole, and the manufacturing requirements for the apparatus body are reduced, which is conducive to reducing costs.

In some embodiments of this application, the apparatus body has a length direction; the extension flow channel extends along the length direction and has a length L1 in the length direction; and the second communication flow channel extends along the width direction and has a length L2 in the width direction; where 0.2 ≤ (S1/L1)/(S2/L2) ≤ 5.

In the above technical solution, setting the ratio of (S1/L1)/(S2/L2) in the range of 0.2 to 5 allows for a smaller pressure drop difference between the first communication hole and the second communication hole, further reducing the probability of a large pressure drop difference between the first communication hole and the second communication hole, thereby achieving the effect of precisely regulating the refrigerant flow rate, and allowing the refrigerant to be more evenly distributed to the plurality of branch inlets.

In some embodiments of this application, 0.8 ≤ (S1/L1)/(S2/L2) ≤ 1.2.

In the above technical solution, setting (S1/L1)/(S2/L2) in the range of 0.8 to 1.2 allows for a smaller pressure drop difference between the first communication hole and the second communication hole and a lower probability of a large pressure drop difference between the first communication hole and the second communication hole, achieving the effect of more precisely regulating the refrigerant flow rate, and allowing the refrigerant to be more evenly distributed to the plurality of branch inlets, thereby allowing for a small refrigerant flow rate difference among the plurality of thermal management components, helping to reduce the probability of a large temperature difference in the battery, and further improving the reliability of the battery.

In some embodiments of this application, a first wall is formed between the main outlet and the extension flow channel, and a size of the first wall in the width direction is 0.5 mm to 2 mm.

In the above technical solution, setting the size of the first wall in the width direction in the range of 0.5 mm to 2 mm allows the first wall to have a more suitable wall thickness, have relatively high strength, and be not prone to damage and allows the wall thickness of the first wall to not be excessively large, allowing the position between the extension flow channel and the main outlet to be more compact, helping to reduce the size of the apparatus body in the width direction and reduce the volume of the apparatus body, thereby reducing the space occupied by the apparatus body, facilitating the arrangement of components in the battery, and helping to reduce the volume of the battery and increase the energy density of the battery.

In some embodiments of this application, two branch inlets and two branch outlets are provided; the two branch outlets include a first branch outlet and a second branch outlet that are provided along the length direction of the apparatus body; a first flow channel is formed between the first branch outlet and the main outlet; a second flow channel is formed between the second branch outlet and the main outlet; a second wall is formed between the first flow channel and the second flow channel; and in the length direction of the apparatus body, a thickness of the second wall is 0.5 mm to 2 mm.

In the above technical solution, the thickness of the second wall is set to fall within the range of 0.5 mm to 2 mm in the length direction of the apparatus body, so that the distance between the first flow channel and the second flow channel may be relatively short, and communication regions between the first flow channel and the main outlet and between the second flow channel and the main outlet are relatively large, that is, communication ports between the first flow channel and the main outlet and between the second flow channel and the main outlet are relatively large. This allows the refrigerant to be evenly distributed in the first flow channel and the second flow channel, allowing for a relatively small difference between the refrigerant flow velocities in the plurality of thermal management components.

In some embodiments of this application, the fluid collecting component further includes a first connecting pipe and a second connecting pipe; the first connecting pipe is in communication with the main inlet; and the second connecting pipe is in communication with the main outlet.

In the above technical solution, setting the first connecting pipe to be in communication with the main inlet facilitates the connection between the fluid collecting component and a refrigerant input component. Setting the second connecting pipe to be in communication with the main outlet facilitates the connection between the fluid collecting component and a refrigerant output component, thereby facilitating the installation of the fluid collecting component and external components.

According to a second aspect, an embodiment of this application further provides a thermal management assembly including: at least two thermal management components, where the thermal management component has a refrigerant inlet and a refrigerant outlet that are in communication with an internal flow path; and the fluid collecting component as described above, where each branch inlet and the corresponding branch outlet form a set of matching structures; the number of the matching structures is equal to the number of the thermal management components, and the matching structures are in one-to-one correspondence to the thermal management components; and in each set of matching structures, the branch inlet is in communication with the refrigerant inlet, and the branch outlet is in communication with the refrigerant outlet.

In the above technical solution, a plurality of thermal management components can be in communication with each other through the fluid collecting component; and when the plurality of thermal management components are in communication with the fluid collecting component, the thermal management components can be arranged side by side. In addition, the installation interference among the plurality of thermal management components can be reduced, and bending avoidance positions on the thermal management components can be reduced. This is conducive to reducing the difficulty in the manufacturing process of the thermal management components and reducing the space occupied by the thermal management components.

According to a third aspect, an embodiment of this application further provides a battery including the thermal management assembly as described above.

In the above technical solution, with the thermal management assembly used, the probability of a large temperature difference occurring on the battery can be reduced, and the reliability of the battery can be improved. In addition, with the thermal management assembly used, the space in the battery can also be saved, facilitating the arrangement of components in the battery or the placement of larger-volume components, and helping to reduce the volume of the battery, thereby increasing the energy density of the battery.

In a fourth aspect, an embodiment of this application further provides an electric apparatus including the thermal management assembly as described above or the battery as described above.

In the above technical solution, with the thermal management assembly or the battery used, the reliability of the battery used by the electric apparatus may be higher, thereby improving the reliability of the electric apparatus, and helping to improve the safety of the electric apparatus.

### BRIEF DESCRIPTION OF DRAWINGS

In order to more clearly illustrate the technical solutions of the embodiments of this application, the drawings required to be used in the embodiments will be briefly described below. It should be understood that the following drawings only show some embodiments of this application, and therefore should not be regarded as limiting the scope. For persons of ordinary skill in the art, other related drawings can also be obtained from these drawings without creative efforts.
FIG. 1 is a schematic structural diagram of a vehicle according to some embodiments of this application;
FIG. 2 is an exploded structural view of a battery according to some embodiments of this application;
FIG. 3 is a schematic three-dimensional structural diagram of a fluid collecting component according to some embodiments of this application;
FIG. 4 is a side view of a fluid collecting component according to some embodiments of this application;
FIG. 5 is a cross-sectional view taken along line A-A in FIG. 4;
FIG. 6 is a schematic three-dimensional structural diagram of a fluid collecting component according to another embodiment of this application;
FIG. 7 is a front view of a fluid collecting component according to another embodiment of this application;
FIG. 8 is a cross-sectional view taken along line B-B in FIG. 7;
FIG. 9 is a cross-sectional view taken along line B-B in FIG. 7 according to another embodiment;
FIG. 10 is a cross-sectional view taken along line B-B in FIG. 7 according to still another embodiment;
FIG. 11 is a schematic three-dimensional structural diagram of a thermal management component according to some embodiments of this application; and
FIG. 12 is a schematic three-dimensional structural diagram of a thermal management assembly according to some embodiments of this application.

Reference signs:
1000. vehicle;
100. battery; 10. box; 11. first box body; 12. second box body; 20. battery cell; 30. thermal management assembly; 2. thermal management component; 21. refrigerant inlet; 22. refrigerant outlet; 3. fluid collecting component; 31. apparatus body; 311. main inlet; 312. main outlet; 313. branch inlet; 314. branch outlet; 3141. first branch outlet; 3142. second branch outlet; 315. extension flow channel; 316. first communication flow channel; 317. second communication flow channel; 318. first communication hole; 319. second communication hole; 320. first wall; 321. first flow channel; 322. second flow channel; 323. second wall; 32. first connecting pipe; 32a. first annular groove; 33. second connecting pipe; 33a. second annular groove;
200. controller; and 300. motor.

### DESCRIPTION OF EMBODIMENTS

In order to make the objectives, technical solutions, and advantages of the embodiments of this application clearer, the technical solutions in the embodiments of this application will be clearly described below in conjunction with the drawings in the embodiments of this application. Apparently, the described embodiments are some of the embodiments of this application, rather than all of the embodiments. Based on the embodiments in this application, all other embodiments obtained by persons of ordinary skill in the art without creative efforts fall within the protection scope of this application.

Unless otherwise defined, all technical and scientific terms used in this application have the same meaning as commonly understood by persons skilled in the technical field to which this application belongs; the terms used in the specification of the application in this application are only for the purpose of describing specific embodiments, and are not intended to limit this application; the terms "comprise", "include", "have", any variations thereof in the specification and claims of this application and the above description of the drawings are intended to cover non-exclusive inclusions. The terms "first", "second", and the like in the specification and claims of this application or the above drawings are used to distinguish different objects, rather than to describe a specific order or primary-secondary relationship.

Reference to "embodiment" in this application means that a specific feature, structure, or characteristic described in conjunction with the embodiment may be included in at least one embodiment of this application. The appearance of the phrase in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. For persons of ordinary skill in the art, the specific meanings of the above terms in this application can be understood according to specific situations.

The term "and/or" in this application is only an associative relationship for describing associated objects, indicating that three relationships may be present. For example, A and/or B may indicate the following three cases: presence of only A, presence of both A and B, and presence of only B. In addition, the character "/" in this application generally indicates an "or" relationship between contextually associated objects.

In some embodiments of this application, same reference signs denote same components, and for brevity, in different embodiments, detailed descriptions of same components are not repeated. It should be understood that, as shown in the drawings, sizes such as thickness, length, and width of various components and sizes such as thickness, length, and width of integrated apparatuses in the embodiments of this application are merely for illustrative purposes and should not constitute any limitations on this application.

In this application, "a plurality of" means more than two (inclusive).

In this application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell, which is not limited in the embodiments of this application either.

The battery mentioned in the embodiments of this application refers to a single physical module including one or more battery cells to provide higher voltage and capacity. For example, the battery mentioned in this application may include a battery module, a battery pack, or the like. The battery typically includes a box for packaging one or more battery cells or a plurality of battery modules. The box can prevent liquids or other foreign matters from affecting the charging or discharging of the battery cells.

A battery cell includes a housing, an electrode assembly, and an electrolyte. The housing is used to accommodate the electrode assembly and the electrolyte. The electrode assembly includes a positive electrode plate, a negative electrode plate, and a separator. The battery cell mainly relies on metal ions moving between the positive electrode plate and the negative electrode plate to work. The positive electrode plate includes a positive electrode current collector and a positive electrode active material layer, where the positive electrode active material layer is applied on a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the material of the positive electrode current collector may be aluminum, and the positive electrode active material may be lithium cobaltate, lithium iron phosphate, ternary lithium, or lithium manganate. The negative electrode plate includes a negative electrode current collector and a negative electrode active material layer, where the negative electrode active material layer is applied on a surface of the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab. The material of the negative electrode current collector may be copper, and the negative electrode active material may be carbon or silicon. To allow a large current to pass through without any fusing, a plurality of positive electrode tabs are provided and stacked together, and a plurality of negative electrode tabs are provided and stacked together.

The material of the separator may be PP (polypropylene, polypropylene) or PE (polyethylene, polyethylene). In addition, the electrode assembly may be a wound structure or a laminated structure, and the embodiments of this application are not limited thereto.

In recent years, new energy vehicles have undergone rapid development. In the field of electric vehicles, traction batteries, as traction sources of electric vehicles, play an irreplaceable and important role. A battery includes a box and a plurality of battery cells accommodated in the box. As a core component of new energy vehicles, the battery has high requirements in terms of safety and reliability as well as cycle life.

In a general traction battery, in order to make the battery obtain sufficient power, a plurality of battery cells in a box of the battery are typically stacked in an arranged manner. However, the battery cells will generate a large amount of heat during continuous charging and discharging, which will cause the internal temperature of the battery to rise, and the structure with the plurality of battery cells stacked will exacerbate the occurrence of this phenomenon, thereby seriously affecting the service performance and service life of the battery, and even leading to greater safety hazards in the battery during use, which is not conducive to the safety of consumers. Therefore, in related technologies, a thermal management assembly for cooling the battery cells is typically disposed inside the battery. The thermal management assembly includes a fluid collector and a cooling pipeline. The fluid collector is provided with a liquid inlet and a liquid outlet. The liquid inlet is used to introduce a refrigerant, and the liquid outlet is used to discharge the refrigerant. The cooling pipeline is in communication with the fluid collector to form a loop, so that the refrigerant can circulate in the cooling pipeline for cooling and heating the battery. However, in related technologies, the uniform cooling or heating effect of the thermal management assembly on the battery is relatively poor, leading to a large temperature difference formed on the battery, failing to achieve a good temperature control effect, and seriously affecting the reliability of the battery. In addition, the thermal management assembly has a relatively large volume and may occupy a large space inside the battery, thus affecting the energy density of the battery.

Based on the above considerations, in order to solve the problem that the internal temperature of the battery rises and results in poor reliability of the battery, the inventor has designed a fluid collecting component including an apparatus body, where the apparatus body is provided with a main inlet, a main outlet, a plurality of branch inlets, and a plurality of branch outlets; the plurality of branch outlets are in communication with the main outlet; an extension flow channel is formed inside the apparatus body; one end of the extension flow channel is in communication with the main inlet, and the other end thereof extends toward a side away from the main inlet; one of the plurality of branch inlets is in communication with the main inlet, and the others are in communication with the extension flow channel; the number of the branch inlets is equal to the number of the branch outlets, and the branch inlets are in one-to-one correspondence to the branch outlets; and the branch inlets are adjacent to the corresponding branch outlets.

In the fluid collecting component with this structure, the apparatus body is provided with the plurality of branch inlets and the plurality of branch outlets, so that the fluid collecting component can be in communication with a plurality of thermal management components, and the temperature inside the battery can be controlled through the plurality of thermal management components. This can reduce the probability of a large temperature difference occurring in the battery, improve the temperature uniformity of the battery, reduce the probability of a sharp rise in the temperature of the battery, and improve the reliability of the battery. Moreover, the plurality of branch inlets can be in communication with the main inlet through the extension flow channel, and the branch inlets are adjacent to the corresponding branch outlets, so that the plurality of branch inlets can be arranged in a dispersed manner. This is conducive to reducing the probability of installation interference among the plurality of thermal management components, reducing the occurrence of the thermal management components needing to be bent, maintaining flatness of the thermal management components, reducing the large space occupied by the thermal management components inside the battery, reducing the height size of the battery, and increasing the energy density of the battery.

The battery disclosed in the embodiments of this application can be used in, but not limited to, electric apparatuses such as vehicles, ships, or aircrafts. A power supply system of the electric apparatus may include the fluid collecting component, the thermal management assembly, and the battery disclosed in this application, which is conducive to expanding the application scope of the fluid collecting component and the thermal management assembly.

An embodiment of this application provides an electric apparatus using a battery as a power source. The electric apparatus may be but is not limited to a mobile phone, a tablet, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric airplane toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

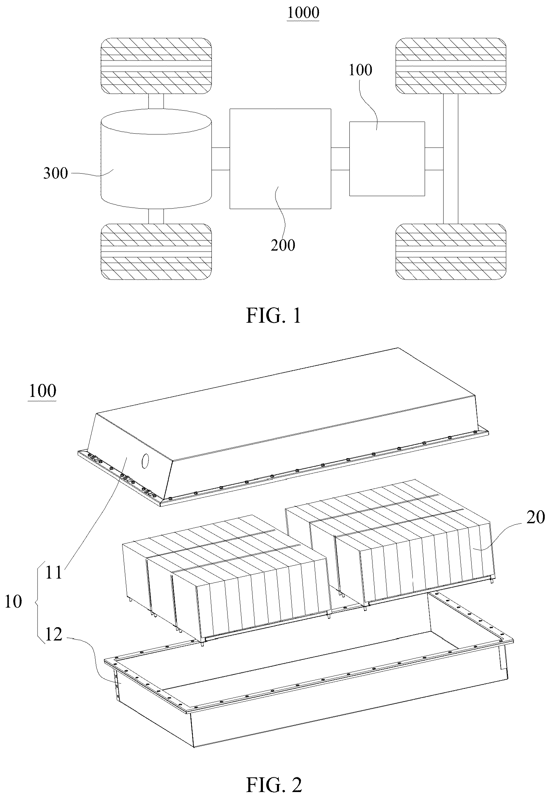

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid vehicle, an extended-range vehicle, or the like. A battery 100 is provided inside the vehicle 1000, and the battery 100 may be provided at the bottom or the front or the rear of the vehicle 1000. The battery 100 may be configured to supply power to the vehicle 1000. For example, the battery 100 may serve as an operating power source of the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 may not only serve as an operating power source of the vehicle 1000, but also as a driving power source of the vehicle 1000, replacing or partially replacing fuel or natural gas to provide driving traction for the vehicle 1000.

Referring to FIG. 2, FIG. 2 is an exploded structural view of a battery 100 according to some embodiments of this application. The battery 100 includes a box 10 and a plurality of battery cells 20, and the battery cells 20 are configured to be accommodated in the box 10. The box 10 is configured to provide an assembly space for the battery cells 20, and the box 10 may adopt various structures. In some embodiments, the box 10 may include a first box body 11 and a second box body 12, the first box body 11 and the second box body 12 fit each other, and the first box body 11 and the second box body 12 jointly define an assembly space for accommodating the battery cells 20. The second box body 12 may be a hollow structure with one end open, the first box body 11 may be a plate-like structure, and the first box body 11 covers the open side of the second box body 12, so that the first box body 11 and the second box body 12 jointly define an assembly space. The first box body 11 and the second box body 12 may alternatively each be a hollow structure with one side open, and the open side of the first box body 11 is engaged with the open side of the second box body 12. Certainly, the box 10 formed by the first box body 11 and the second box body 12 may be in various shapes such as cylinder and cuboid.

In the battery 100, the plurality of battery cells 20 are connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the battery 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the battery 10. The battery 100 may further include other structures. For example, the battery apparatus 100 may further include a busbar configured to implement electrical connection between the plurality of battery cells 20.

Referring to FIG. 2, the battery 100 may include multiple rows of battery cells 20, where the multiple rows of battery cells 20 may be arranged along a length direction of the box 10, and each row of battery cells 20 may include a plurality of battery cells 20 arranged along a width direction of the box 10. Alternatively, the multiple rows of battery cells 20 may be arranged along the width direction of the box 10, and each row of battery cells 20 may include a plurality of battery cells 20 arranged along the length direction of the box 10.

Each battery cell 20 may be a secondary battery or a primary battery or may be a lithium-sulfur battery, a sodium-ion battery, or a magnesium-ion battery, but is not limited thereto. The battery cell 20 may be cylindrical, flat, cuboid, or of other shapes. For example, referring to FIG. 2, the shape of the battery cell 20 may be a cuboid.

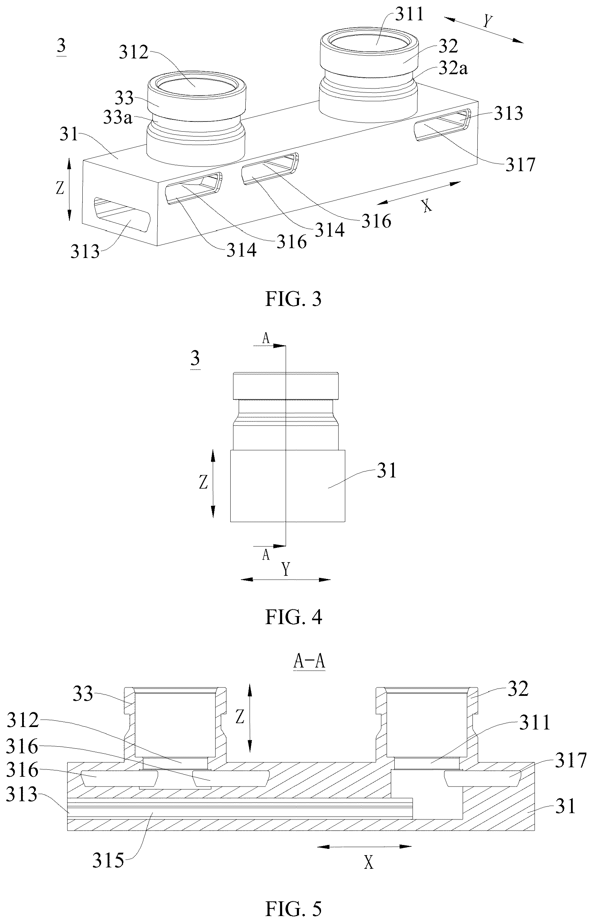

According to some embodiments of this application, referring to FIGs. 3 to 5, FIG. 3 is a schematic three-dimensional structural diagram of a fluid collecting component 3 according to some embodiments of this application. FIG. 5 is a cross-sectional view of an internal structure of a fluid collecting component 3 according to some embodiments of this application. The fluid collecting component 3 includes an apparatus body 31, where the apparatus body 31 is provided with a main inlet 311, a main outlet 312, a plurality of branch inlets 313, and a plurality of branch outlets 314; the plurality of branch outlets 314 are in communication with the main outlet 312; an extension flow channel 315 is formed inside the apparatus body 31; one end of the extension flow channel 315 is in communication with the main inlet 311, and the other end thereof extends toward a side away from the main inlet 311; one of the plurality of branch inlets 313 is in communication with the main inlet 311, and the others are in communication with the extension flow channel 315; the number of the branch inlets 313 is equal to the number of the branch outlets 314, and the branch inlets 313 are in one-to-one correspondence to the branch outlets 314; and the branch inlets 313 are adjacent to the corresponding branch outlets 314.

The fluid collecting component 3 may refer to a refrigerant collecting component which is configured to introduce a refrigerant and can distribute the refrigerant to external pipe components, collect the refrigerant together at the end of the circulation of the refrigerant, and output the refrigerant together. Specifically, the fluid collecting component 3 can be understood as but not limited to a multi-way refrigerant joint. The fluid collecting component 3 may be but is not limited to a cuboid structural member, a cubic structural member, or a cylindrical structural member.

The fluid collecting component 3 can be applied to a thermal management assembly 30, and the thermal management assembly 30 can perform temperature management (such as cooling or heating) on the battery 100. The thermal management assembly 30 includes a thermal management component 2 and the fluid collecting component 3, and the thermal management component 2 may be but is not limited to a pipe component which is configured to implement the circulation of the refrigerant and form a refrigerant loop together with the fluid collecting component 3. The pipe component may be but is not limited to a round pipe or a flat pipe.

Referring to FIG. 5, the extension flow channel 315 may refer to a flow channel formed inside the fluid collecting component 3, which is used to communicate the main inlet 311 and the plurality of branch inlets 313. The extension flow channel 315 may be but is not limited to a linear flow channel, an arc-shaped flow channel, or a curved flow channel, and the shape of a cross-section of a flow channel opening of the extension flow channel 315 may be but is not limited to a rectangle, a circle, or a trapezoid. The main inlet 311, the main outlet 312, the branch inlets 313, and the branch outlets 314 may be but are not limited to rectangular openings, circular openings, and triangular openings.

According to the fluid collecting component 3 of the above structure, the fluid collecting component 3 can be in communication with a plurality of thermal management components 2, each thermal management component 2 is in communication with the corresponding branch inlet 313 and branch outlet 314, and the plurality of thermal management components 2 can all inject the refrigerant from the main inlet 311. As compared with a case where one thermal management component 2 is configured to form a refrigerant loop to control the temperature of the battery 100, the plurality of thermal management components 2 forming refrigerant loops respectively for temperature control can reduce a refrigerant loop stroke length of each thermal management component 2 and improve the heat exchange efficiency, thereby improving the temperature control effect, and helping to improve the temperature uniformity of the battery 100, reduce the probability of a large temperature difference occurring on the battery 100, and thus improve the reliability of the battery 100.

The main inlet 311 and the main outlet 312 may be spaced apart along a first direction X of the fluid collecting component 3, where the first direction X may be one of a length direction, a width direction, and a height direction of the fluid collecting component 3. For example, referring to FIG. 3, the first direction X is the length direction of the fluid collecting component 3. Correspondingly, the extension flow channel 315 extends along the first direction X; the plurality of branch inlets 313 are in communication with the extension flow channel 315 and can be spaced apart along the first direction X; and the branch inlets 313 are arranged adjacent to the corresponding branch outlets 314.

For example, referring to FIG. 3, two branch inlets 313 and two branch outlets 314 are provided; the two branch inlets 313 are provided at two ends of the fluid collecting component 3 in the first direction X; and the two branch outlets 314 are provided between the two branch inlets 313. In this embodiment, the fluid collecting component 3 can be in communication with two thermal management components 2, the two thermal management components 2 can be arranged side by side, and the two thermal management components 2 do not need to be bent for avoidance. Certainly, this is just an example, and the number of the branch inlets 313 and the number of the branch outlets 314 may be but are not limited to two, three, and four.

It can be seen that, according to the fluid collecting component 3 of the above structure, the plurality of branch inlets 313 can be in communication with the main outlet 312 through the extension flow channel 315 and arranged in a dispersed manner. Since the branch inlets 313 are arranged adjacent to the corresponding branch outlets 314, and two ends of each thermal management component 2 can be in communication with the corresponding branch inlet 313 and branch outlet 314, the probability of position interference between any two adjacent thermal management components 2 can be reduced, and the occurrence of any thermal management component 2 needing to be bent for avoiding other thermal management components 2 can be reduced. Since the plurality of thermal management components 2 are mostly arranged at the top or bottom of the battery 100 for temperature control, the fluid collecting component 3 of the above structure is conducive to maintaining the overall flatness of the thermal management components 2, reducing the space occupied by the thermal management components 2, and saving the space in the battery 100.

According to the fluid collecting component 3 of the embodiments of this application, the apparatus body 31 is provided with a plurality of branch inlets 313 and a plurality of branch outlets 314, so that the fluid collecting component 3 can be in communication with a plurality of thermal management components 2, and the temperature inside the battery 100 can be controlled through the plurality of thermal management components 2. This can reduce the probability of a large temperature difference occurring in the battery 100, improve the temperature uniformity of the battery 100, reduce the probability of a sharp rise in the temperature of the battery 100, and improve the reliability of the battery 100. Moreover, the plurality of branch inlets 313 can be in communication with the main inlet 311 through the extension flow channel 315, and the branch inlets 313 are adjacent to the corresponding branch outlets 314, so that the plurality of branch inlets 313 can be arranged in a dispersed manner. This is conducive to reducing the probability of installation interference among the plurality of thermal management components 2, reducing the occurrence of the thermal management components 2 needing to be bent for avoidance, maintaining the overall flatness of the thermal management components 2, and reducing the large space occupied by the thermal management components 2.

In some embodiments of this application, as shown in FIG. 3, the extension flow channel 315 extends along the length direction of the apparatus body 31; and the plurality of branch outlets 314 are provided on a same side of the apparatus body 31 in the length direction.

Referring to FIG. 3, the length direction of the apparatus body 31 may be the first direction X, which can be understood as the plurality of branch outlets 314 being provided at the same end of the apparatus body 31 in a second direction Y.

In the above technical solution, the extension flow channel 315 extends along the length direction of the apparatus body 31, so that the extension flow channel 315 is a linear flow channel. This is conducive to reducing the flow resistance in the extension flow channel 315 and reducing the flow velocity loss of the refrigerant. The plurality of branch outlets 314 are provided on a same side of the apparatus body 31, which is conducive to providing the plurality of thermal management components 2 on the same side of the apparatus body 31, thereby allowing the position layout of the plurality of thermal management components 2 to be relatively compact, reducing the size of the thermal management assembly 30 in the second direction Y, and further reducing the space occupied by the thermal management assembly 30.

In some embodiments of this application, as shown in FIG. 3, at least part of the plurality of branch inlets 313 and the branch outlets 314 are provided on a same side of the apparatus body 31.

Part of the plurality of branch inlets 313 and the branch outlets 314 are provided on a same side of the apparatus body 31, and the others and the corresponding branch outlets are provided on different sides of the apparatus body 31. For example, referring to FIG. 3, two branch inlets 313 and two branch outlets 314 are provided; and one of the two branch inlets 313 is provided at one end of the apparatus body 31 in the first direction X, and the other is close to the other end of the apparatus body 31 in the first direction X, and is provided at the same end of the apparatus body 31 in the second direction Y as the two branch outlets 314.

Alternatively, the plurality of branch inlets 313 and branch outlets 314 may be provided on a same side of the apparatus body 31.

For example, a temperature-controlled object is the battery 100; the fluid collecting component 3 of the above structure is used; for a thermal management component 2 connected to the branch inlet 313 and the branch outlet 314 on the same side, a distance between two ends of the thermal management component 2 may be relatively small, and the space at the two ends of the apparatus body 31 in the first direction X is not occupied. Therefore, in the battery 100, the two ends of the apparatus body 31 in the first direction X have relatively sufficient space for arranging other components of the battery 100, facilitating the flexible arrangement of components in the battery 100, and reducing the pipeline length of the thermal management component 2.

In the above technical solution, in the plurality of thermal management components 2, for the thermal management component 2 connected to the branch inlet 313 and the branch outlet 314 on the same side, the distance between the two ends of its pipeline may be relatively short, which is conducive to reducing the length of the thermal management component 2, reducing the material of the thermal management component 2, and reducing the cost. Meanwhile, an end space of the apparatus body 31 in the first direction X does not need to be connected to the thermal management component 2, and there is relatively sufficient space for arranging other components.

In some embodiments of this application, as shown in FIG. 3, part of the plurality of branch inlets 313 and the corresponding branch outlets 314 are provided on two adjacent sides of the apparatus body 31.

It can be understood that part of the plurality of branch inlets 313 and the corresponding branch outlets 314 are provided on two adjacent sides of the apparatus body 31, and the others and the corresponding branch outlets 314 are provided on a same side of the apparatus body 31. Referring to FIG. 3, two branch inlets 313 and two branch outlets 314 are provided; and one of the two branch inlets 313 and the corresponding branch outlet 314 are provided on two adjacent sides of the apparatus body 31, and the other and the corresponding branch outlet 314 are provided on a same side of the apparatus body 31.

In the above technical solution, part of the plurality of branch inlets 313 and the corresponding branch outlets 314 are provided on two adjacent sides of the apparatus body 31, and the others and the corresponding branch outlets 314 are provided on a same side of the apparatus body 31. With this solution, the branch inlets 313 and the corresponding branch outlets 314 are provided on the same side, which can make the two ends of the corresponding thermal management component 2 close to each other, and is conducive to reducing the length of the thermal management component 2 and reducing the material of the thermal management component 2. Meanwhile, the end space of the apparatus body 31 in the first direction X does not need to be connected to the thermal management component 2, which is conducive to avoiding other components of the battery 100, thereby facilitating the installation of other components. In addition, the branch inlets 313 and the corresponding branch outlets 314 are provided on two adjacent sides, and the apparatus body 31 can discharge the refrigerant at the end in the first direction X. This is conducive to reducing the size of the apparatus body 31 in the first direction X, reducing the material of the apparatus body 31, and reducing the cost.

In some embodiments of this application, as shown in FIGs. 3 and 5, the apparatus body 31 has a height direction; a first communication flow channel 316 is formed between the branch outlet 314 and the main outlet 312; and the first communication flow channel 316 and the extension flow channel 315 are spaced apart in the height direction.

Referring to FIG. 3, the height direction of the apparatus body 31 may refer to a third direction Z. The first communication flow channel 316 and the extension flow channel 315 are spaced apart in the height direction, which can be understood as that the first communication flow channel 316 is located on an upper side of the extension flow channel 315 in the height direction, or the first communication flow channel 316 is located on a lower side of the extension flow channel 315 in the height direction. The first communication flow channel 316 may be but is not limited to a linear flow channel, an arc-shaped flow channel, or a curved flow channel.

In the above technical solution, it can be understood that the first communication flow channel 316 and the extension flow channel 315 are arranged in layers in the height direction of the apparatus body 31. With this solution, the probability of interference between the first communication flow channel 316 and the extension flow channel 315 can be reduced, which is conducive to improving the manufacturability of the apparatus body 31, and reducing the size of the apparatus body 31 in the second direction Y, thereby reducing the volume of the apparatus body 31, reducing the space occupied by the fluid collecting component 3, allowing for more space in the battery 100 to arrange other components, or increasing the energy density of the battery 100.

In some embodiments of this application, a reference plane perpendicular to the height direction is made; and an orthographic projection of the extension flow channel 315 at least partially overlaps with an orthographic projection of the first communication flow channel 316 on the reference plane.

Referring to FIG. 3, the height direction of the apparatus body 31 may refer to the third direction Z, and correspondingly, the reference plane may be a horizontal plane. The orthographic projection of the extension flow channel 315 at least partially overlapping with the orthographic projection of the first communication flow channel 316 on the reference plane can be understood as that in the second direction Y, a portion of the orthographic projection of the extension flow channel 315 may overlap with a portion of the orthographic projection of the first communication flow channel 316, and other portions of the orthographic projections of the two are misaligned with each other, that is, a small portion of the orthographic projection of the extension flow channel 315 overlaps with a small portion of the orthographic projection of the first communication flow channel 316; or the orthographic projection of the extension flow channel 315 is located below or above the orthographic projection of the first communication flow channel 316, that is, a large portion of the orthographic projection of the extension flow channel 315 overlaps with a large portion of the orthographic projection of the first communication flow channel 316.

In the above technical solution, the orthographic projection of the extension flow channel 315 at least partially overlaps with the orthographic projection of the first communication flow channel 316 on the reference plane, so that the size of the apparatus body 31 in the second direction X can be further reduced, thereby reducing the space occupied by the fluid collecting component 3, allowing for more space in the battery 100 to arrange other components, and further increasing the energy density of the battery 100.

In some embodiments of this application, as shown in FIGs. 3 and 5, a second communication flow channel 317 is formed between the main inlet 311 and the one of the plurality of branch inlets 313 that is in communication with the main inlet 311; and the second communication flow channel 317 and the extension flow channel 315 are located on two sides of the main inlet 311.

The second communication flow channel 317 and the extension flow channel 315 may be located on two sides of the main inlet 311 in the first direction X (as shown in FIGs. 3 and 5). Alternatively, the second communication flow channel 317 and the extension flow channel 315 may be located on two sides of the main inlet 311 in the second direction Y. The second communication flow channel 317 may be but is not limited to a linear flow channel, an arc-shaped flow channel, or a curved flow channel.

When the refrigerant enters the apparatus body 31 from the main inlet 311, part of the refrigerant flows to an inlet of the second communication flow channel 317 on one side. At this time, a flow velocity of this part of the refrigerant entering the inlet of the second communication flow channel 317 does not change greatly compared with an initial flow velocity (an initial flow velocity entering the main inlet 311), and the other part of the refrigerant flows to an inlet of the extension flow channel 315 on the other side. Since the extension flow channel 315 and the second communication flow channel 317 are on different sides, the refrigerant flowing to the inlet of the extension flow channel 315 and the refrigerant flowing to the inlet of the second communication flow channel 317 are far apart. Therefore, the flow velocity of the refrigerant flowing to the inlet of the extension flow channel 315 is not greatly attenuated, and the mutual influence between the refrigerant flowing to the second communication flow channel 317 and the refrigerant flowing to the extension flow channel 315 is relatively small, facilitating uniform distribution of the refrigerant to the second communication flow channel 317 and the extension flow channel 315.

In the above technical solution, providing the second communication flow channel 317 and the extension flow channel 315 on two sides of the main inlet 311 can reduce the influence between the refrigerant flowing to the inlet of the second communication flow channel 317 and the refrigerant flowing to the inlet of the extension flow channel 315, allowing the refrigerant entering the main inlet 311 to be relatively evenly distributed to the second communication flow channel 317 and the extension flow channel 315, and reducing the probability that refrigerant flow velocities of the plurality of branch inlets 313 differ greatly due to uneven distribution of the refrigerant, thereby reducing the probability that the battery 100 has a large temperature difference due to different refrigerant flow velocities of the plurality of thermal management components 2, and helping to improve the temperature control effect on the battery 100 and improve the reliability of the battery 100.

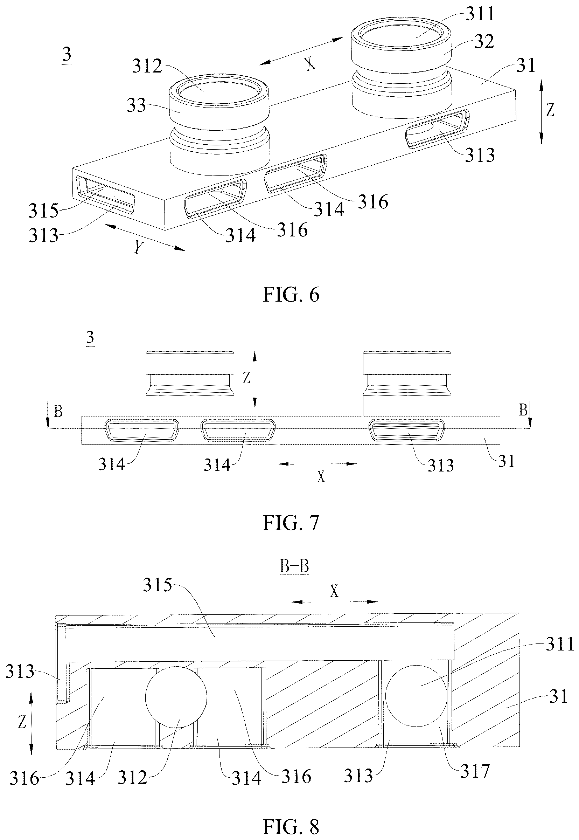

In some embodiments of this application, as shown in FIGs. 6 to 10, the apparatus body 31 has a width direction; a first communication flow channel 316 is formed between the branch outlet 314 and the main outlet 312; and the first communication flow channel 316 and the extension flow channel 315 are spaced apart along the width direction.

Referring to FIGs. 7, 8, and 9, the width direction of the apparatus body 31 may be the second direction Y. In the above technical solution, the first communication flow channel 316 and the extension flow channel 315 are spaced apart along the width direction, so that the size of the apparatus body 31 in the height direction can be reduced, that is, the size of the fluid collecting component 3 in the height direction can be reduced, thereby facilitating the reduction of the space occupied by the fluid collecting component 3 in the height direction of the battery 100. With this solution, there may be sufficient space in the height direction inside the battery 100 to arrange more components or larger-volume components. With this solution, the size of the battery 100 in the height direction can also be reduced, thereby reducing the volume of the battery 100, and helping to increase the energy density of the battery 100.

In some embodiments of this application, as shown in FIGs. 7 to 9, a second communication flow channel 317 is formed between the main inlet 311 and the one of the plurality of branch inlets 313 that is in communication with the main inlet 311; and the second communication flow channel 317 is provided on a side of the main inlet 311 away from the main outlet 312 and is in communication with the extension flow channel 315.

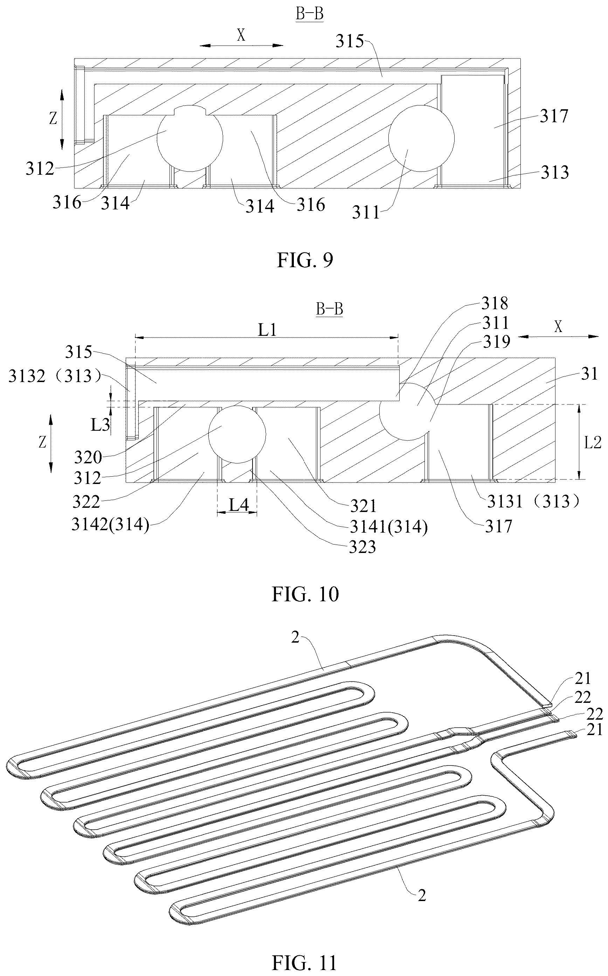

Referring to FIG. 9, the main outlet 312 and the second communication flow channel 317 can be understood as being located at two ends of the main inlet 311 in the first direction X. After being in communication with the main inlet 311, the second communication flow channel 317 can extend along the second direction Y and is in communication with the extension flow channel 315. With this solution, when the apparatus body 31 is manufactured, the extension flow channel 315 does not need to be in direct communication with the main inlet 311, but the refrigerant is distributed to the remaining branch inlets 313 through communication between the extension flow channel 315 and the second communication flow channel 317. The structure of the extension flow channel 315 is relatively simple and easy to form, which can reduce the manufacturing difficulty of the apparatus body 31.

In the above technical solution, the refrigerant of the main inlet 311 first flows to the second communication flow channel 317, part of the refrigerant in the second communication flow channel 317 flows to the branch inlet 313, and the other part flows to the extension flow channel 315. With this solution, the second communication flow channel 317 is in communication with the extension flow channel 315 and the branch inlet 313, so that the structure of the apparatus body 31 is relatively simple, thereby improving the manufacturability of the apparatus body 31 and reducing the cost.

In some embodiments of this application, as shown in FIGs 7 to 9, the apparatus body 31 has a height direction; a second communication flow channel 317 is formed between the main inlet 311 and the one of the plurality of branch inlets 313 that is in communication with the main inlet 311; the main inlet 311 is in communication with the second communication flow channel 317 along the height direction; a reference plane perpendicular to the height direction is made; and an orthographic projection of the main inlet 311 at least partially overlaps with an orthographic projection of the second communication flow channel 317 on the reference plane.

Referring to FIGs. 7 to 9, the height direction of the apparatus body 31 may refer to the third direction Z. The reference plane may refer to a horizontal plane perpendicular to the third direction Z. The orthographic projection of the main inlet 311 at least partially overlaps with the orthographic projection of the second communication flow channel 317 on the reference plane, which can be understood as that a portion of the orthographic projection of the main inlet 311 overlaps with a portion of the orthographic projection of the second communication flow channel 317, and other portions of the orthographic projections of the two are misaligned with each other; or one of the orthographic projection of the main inlet 311 and the orthographic projection of the second communication flow channel 317 is located directly below the other, and relatively large portions of the orthographic projections of the two overlap with each other.

In the above technical solution, the orthographic projection of the main inlet 311 at least partially overlaps with the orthographic projection of the second communication flow channel 317 on the reference plane, allowing the position distribution between the main inlet 311 and the second communication flow channel 317 to be relatively compact, and reducing the size of the apparatus body 31 in the first direction X, thereby reducing the space occupied by the fluid collecting component 3 in the battery 100, allowing for a larger space in the first direction X of the battery 100 to arrange components, reducing the volume of the battery 100, and increasing the energy density of the battery 100.

In some embodiments of this application, as shown in FIG. 10, one of the plurality of branch inlets 313 is in communication with the main inlet 311, and a second communication flow channel 317 is formed between the one of the plurality of branch inlets 313 and the main inlet 311; the second communication flow channel 317 and the extension flow channel 315 are located on two sides of the main inlet 311; a first communication hole 318 is formed between the extension flow channel 315 and the main inlet 311; a second communication hole 319 is formed between the second communication flow channel 317 and the main inlet 311; and an opening area of the first communication hole 318 is S1, and an opening area of the second communication hole 319 is S2, where 0.5 ≤ S1/S2 ≤ 1.5.

Since the extension flow channel 315 is in communication with the main inlet 311 and the remaining branch inlets 313, and the second communication flow channel 317 is in communication with the main inlet 311 and one branch inlet 313, the length of the extension flow channel 315 is greater than that of the second communication flow channel 317. Typically, the velocity of the refrigerant in the fluid collecting component 3 is in a suitable range, and the pressure drop between the first communication hole 318 and the second communication hole 319 mainly depends on the opening area S1 of the first communication hole 318 and the opening area S2 of the second communication hole 319. Therefore, in order to ensure that a pressure drop difference between the first communication hole 318 and the second communication hole 319 is small, the opening area S1 of the first communication hole 318 and the opening area S2 of the second communication hole 319 need to be in a suitable range. S1/S2 may be 0.5, 0.6, 0.7, 0.8, 0.9, 1.0, 1.1, 1.2, 1.3, 1.4, 1.5, or the like.

It can be understood that if S1/S2 is less than 0.5, the pressure difference between the first communication hole 318 and the second communication hole 319 is large, the pressure drop of the first communication hole 318 is relatively small, the flow rate is also relatively low, and the refrigerant flow velocity of the corresponding branch inlet 313 is also relatively low, while the pressure drop of the second communication hole 319 is relatively large, the flow rate is also relatively high, and the refrigerant flow velocity of the corresponding branch inlet 313 is also relatively high, leading to uneven distribution of refrigerant flow rates among the plurality of thermal management components 2, and resulting in a large temperature difference in the battery 100. If S1/S2 is greater than 1.5, the pressure difference between the first communication hole 318 and the second communication hole 319 is large, the pressure drop of the first communication hole 318 is relatively large, the flow rate is also relatively high, and the refrigerant flow velocity of the corresponding branch inlet 313 is also relatively high, while the pressure drop of the second communication hole 319 is relatively small, the flow rate is also relatively low, and the refrigerant flow velocity of the corresponding branch inlet 313 is also relatively low, leading to uneven distribution of refrigerant flow rates among the plurality of thermal management components 2, and resulting in a large temperature difference in the battery 100.

In the above technical solution, setting the ratio of the opening area S1 of the first communication hole 318 to the opening area S2 of the second communication hole 319 in the range of 0.5 to 1.5 allows the pressure drop difference between the first communication hole 318 and the second communication hole 319 to fall within a suitable range, reducing the probability of a large pressure drop difference between the first communication hole 318 and the second communication hole 319, thereby achieving the effect of regulating the refrigerant flow rate, and allowing the refrigerant to be evenly distributed to the plurality of branch inlets 313. In addition, with this solution, the refrigerant can be evenly distributed between the first communication hole 318 and the second communication hole 319, the manufacturing requirements for the apparatus body 31 are reduced, and the reduction of the cost is facilitated.

In some embodiments of this application, as shown in FIG. 10, the apparatus body 31 has a length direction; the extension flow channel 315 extends along the length direction and has a length L1 in the length direction; and the second communication flow channel 317 extends along the width direction and has a length L2 in the width direction, where 0.2 ≤ (S1/L1)/(S2/L2) ≤ 5.

Referring to FIG. 10, the length direction may refer to the first direction X, and the width direction may refer to the second direction Y.

Referring to the foregoing description, the pressure drop between the first communication hole 318 and the second communication hole 319 mainly depends on the opening area S1 of the first communication hole 318 and the opening area S2 of the second communication hole 319, and is also related to the length L1 of the extension flow channel 315 and the length L2 of the second communication flow channel 317. Setting the ratio of (S1/L1)/(S2/L2) in a suitable range can more precisely regulate the distribution of the refrigerant flow rate, so that the distribution of the refrigerant among the plurality of branch inlets 313 is more even.

(S1/L1)/(S2/L2) may be 0.2, 0.4, 0.6, 0.8, 1.0, 1.2, 1.4, 1.6, 1.8, 2.0, 2.2, 2.4, 2.6, 2.8, 3.0, 3.2, 3.4, 3.6, 3.8, 4.0, 4.2, 4.4, 4.6, 4.8, 5.0, or the like.

It can be understood that if (S1/L1)/(S2/L2) is less than 0.2, the pressure difference between the first communication hole 318 and the second communication hole 319 is large, the pressure drop of the first communication hole 318 is relatively small, the flow rate is also relatively low, and the refrigerant flow velocity of the corresponding branch inlet 313 is also relatively low, while the pressure drop of the second communication hole 319 is relatively large, the flow rate is also relatively high, and the refrigerant flow velocity of the corresponding branch inlet 313 is also relatively high, leading to uneven distribution of refrigerant flow rates among the plurality of thermal management components 2, and resulting in a large temperature difference in the battery 100.

If S1/S2 is greater than 5.0, the pressure difference between the first communication hole 318 and the second communication hole 319 is large, the pressure drop of the first communication hole 318 is relatively large, the flow rate is also relatively high, and the refrigerant flow velocity of the corresponding branch inlet 313 is also relatively high, while the pressure drop of the second communication hole 319 is relatively small, the flow rate is also relatively low, and the refrigerant flow velocity of the corresponding branch inlet 313 is also relatively low, leading to uneven distribution of refrigerant flow rates among the plurality of thermal management components 2, and resulting in a large temperature difference in the battery 100.

In the above technical solution, setting the ratio of (S1/L1)/(S2/L2) in the range of 0.2 to 5 allows for a smaller pressure drop difference between the first communication hole 318 and the second communication hole 319, further reducing the probability of a large pressure drop difference between the first communication hole 318 and the second communication hole 319, thereby achieving the effect of precisely regulating the refrigerant flow rate, and allowing the refrigerant to be more evenly distributed to the plurality of branch inlets 313.

In some embodiments of this application, 0.8 ≤ (S1/L1)/(S2/L2) ≤ 1.2.

That is, (S1/L1)/(S2/L2) may be 0.8, 0.82, 0.84, 0.86, 0.88, 0.90, 0.92, 0.94, 0.96, 0.98, 1.0, 1.02, 1.04, 1.06, 1.08, 1.10, 1.12, 1.14, 1.16, 1.18, 1.20, or the like.

In the above technical solution, setting (S1/L1)/(S2/L2) in the range of 0.8 to 1.2 allows for a smaller pressure drop difference between the first communication hole 318 and the second communication hole 319 and a lower probability of a large pressure drop difference between the first communication hole 318 and the second communication hole 319, achieving the effect of more precisely regulating the refrigerant flow rate, and allowing the refrigerant to be more evenly distributed to the plurality of branch inlets 313, thereby allowing for a small refrigerant flow rate difference among the plurality of thermal management components 2, helping to reduce the probability of a large temperature difference in the battery 100, and further improving the reliability of the battery 100.

In some embodiments of this application, as shown in FIG. 10, a first wall 320 is formed between the main outlet 312 and the extension flow channel 315, and a size of the first wall 320 in the width direction is 0.5 mm to 2 mm.

Referring to FIG. 10, the size of the first wall 320 in the width direction may be L3, that is, L3 may be 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, or the like.

It can be understood that if the size L3 of the first wall 320 in the width direction is less than 0.5 mm, the wall thickness of the first wall 320 is relatively small, leading to relatively poor strength of the first wall 320, and a relatively high probability of puncture, thus seriously affecting the service life and reliability of the apparatus body 31. If the size L3 of the first wall 320 in the width direction is greater than 2 mm, the wall thickness of the first wall 320 is relatively large, leading to excess strength of the first wall 320. In addition, the size of the apparatus body 31 in the width direction is relatively large, which is not conducive to reducing the volume.

In the above technical solution, setting the size of the first wall 320 in the width direction in the range of 0.5 mm to 2 mm allows the first wall 320 to have a more suitable wall thickness, have relatively high strength, and be not prone to damage, and allows the wall thickness of the first wall 320 to not be excessively large, allowing the position between the extension flow channel 315 and the main outlet 312 to be more compact, helping to reduce the size of the apparatus body 31 in the width direction, and reduce the volume of the apparatus body 31, thereby reducing the space occupied by the apparatus body 31, facilitating the arrangement of components in the battery 100, and helping to reduce the volume of the battery 100 and increase the energy density of the battery 100.

In some embodiments of this application, as shown in FIG. 10, two branch inlets 313 and two branch outlets 314 are provided; and the two branch outlets 314 include a first branch outlet 3141 and a second branch outlet 3142 provided along the length direction of the apparatus body 31; a first flow channel 321 is formed between the first branch outlet 3141 and the main outlet 312; a second flow channel 322 is formed between the second branch outlet 3142 and the main outlet 312; a second wall 323 is formed between the first flow channel 321 and the second flow channel 322; and in the length direction of the apparatus body 31, a thickness of the second wall 323 is 0.5 mm to 2 mm.

Referring to FIG. 10, the thickness of the second wall 323 is L4, that is, L4 may be 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, or the like.

It can be understood that if the thickness of the second wall 323 is less than 0.5 mm in the length direction of the apparatus body 31, the thickness of the second wall 323 is relatively small, the strength is relatively low, and the probability of penetration between the first flow channel 321 and the second flow channel 322 is relatively high, seriously affecting the reliability of the apparatus body 31. In addition, a distance between the first flow channel 321 and the second flow channel 322 is relatively short, which easily causes installation interference between two thermal management members 2.

In the above technical solution, the thickness of the second wall 323 is set to fall within the range of 0.5 mm to 2 mm in the length direction of the apparatus body 31, so that the distance between the first flow channel 321 and the second flow channel 322 may be relatively short, and communication regions between the first flow channel 321 and the main outlet and between the second flow channel 322 and the main outlet 312 are relatively large, that is, communication ports between the first flow channel 321 and the main outlet 312 and between the second flow channel 322 and the main outlet 312 are relatively large. This allows the refrigerant to be evenly distributed in the first flow channel 321 and the second flow channel 322, allowing for a relatively small difference between the refrigerant flow velocities in the plurality of thermal management components 2.

In some embodiments of this application, as shown in FIGs. 3, 6, and 7, the fluid collecting component 3 further includes a first connecting pipe 32 and a second connecting pipe 33; the first connecting pipe 32 is in communication with the main inlet 311; and the second connecting pipe 33 is in communication with the main outlet 312.

The first connecting pipe 32 can be in communication with a refrigerant input component. For example, the refrigerant input component may be a refrigerant input pipe, and the refrigerant input pipe is installed in the first connecting pipe 32.

The second connecting pipe 33 can be in communication with a refrigerant output component. For example, the refrigerant output component may be a refrigerant output pipe, and the refrigerant output pipe is installed in the second connecting pipe 33.

Optionally, a pipe opening shape of the first connecting pipe 32 is the same as the shape of the main inlet 311, and a pipe opening shape of the second connecting pipe 33 is the same as the shape of the main outlet 312. The first connecting pipe 32 and the second connecting pipe 33 may be but are not limited to rectangular pipes and round pipes.

In the above technical solution, setting the first connecting pipe 32 to be in communication with the main inlet 311 facilitates the connection between the fluid collecting component 3 and the refrigerant input component. Setting the second connecting pipe 33 to be in communication with the main outlet 312 facilitates the connection between the fluid collecting component 3 and the refrigerant output component, thereby facilitating the installation of the fluid collecting component 3 and external components.

In some embodiments of this application, a periphery of the first connecting pipe 32 may be provided with a first annular groove 32a; and the refrigerant input pipe may be a hose, and is sleeved on the first connecting pipe 32, and is tightened in the first annular groove 32a by a binding band.

In some embodiments of this application, as shown in FIG. 3, a periphery of the second connecting pipe 33 may be provided with a second annular groove 33a; and the refrigerant output pipe may be a hose, and is sleeved on the second connecting pipe 33, and is tightened in the second annular groove 33a by a binding band. Optionally, the binding band may be but is not limited to a cable tie or a steel wire rope.

In some embodiments of this application, the branch inlet 313 and the branch outlet 314 are each provided with a limiting structure or a guiding structure. In this technical solution, the limiting structure or the guiding structure can be configured to be connected to a tubular joint of the thermal management component 2, facilitating installation and welding.

For example, the guiding structure may be a guiding slope, the thermal management component 2 may be a flat pipe, and a pipe opening of the flat pipe can be installed into the branch inlet 313 or the branch outlet 314 relatively easily along the guiding slope.

According to an embodiment of this application, a fluid collecting component 3 includes an apparatus body 31, where the apparatus body 31 is provided with a main inlet 311, a main outlet 312, two branch inlets 313, and two branch outlets 314; the apparatus body 31 is internally provided with an extension flow channel 315, a first communication flow channel 316, and a second communication flow channel 317; the first communication flow channel 316 extends along a width direction of the apparatus body 31; each branch outlet 314 is in communication with the main outlet 312 through the first communication flow channel 316; the second communication flow channel 317 extends along the width direction of the apparatus body 31 and is in communication with the main inlet 311 and one branch outlet 314; and the extension flow channel 315 extends along a length direction of the apparatus body 31, with one end in communication with the main inlet 311 and the other end in communication with the other branch inlet 313.

The first communication flow channel 316 and the extension flow channel 315 are arranged in layers in a height direction of the apparatus body 31; and the second communication flow channel 317 and the first communication flow channel 316 are arranged in the same layer.

According to another embodiment of this application, a structure of a fluid collecting component 3 is substantially the same as the structure of the fluid collecting component 3 in the above embodiment, except that the first communication flow channel 316 and the extension flow channel 315 are spaced apart in the width direction of the apparatus body 31, and the first communication flow channel 316, the second communication flow channel 317 and the extension flow channel 315 are located at the same height.

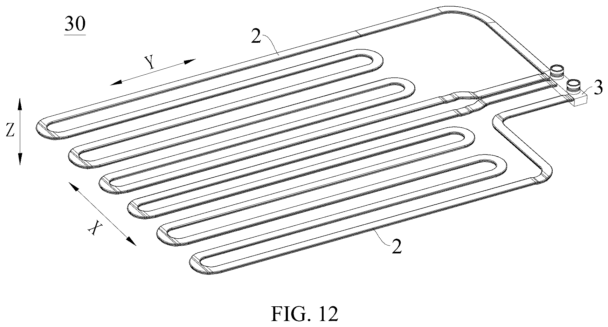

According to a second aspect, as shown in FIGs. 11 and 12, an embodiment of this application further provides a thermal management assembly 30 including: thermal management components 2 and a fluid collecting component 3, where at least two thermal management components 2 are provided; and each thermal management component 2 has a refrigerant inlet 21 and a refrigerant outlet 22 that are in communication with an internal flow path; a branch inlet 313 and the corresponding branch outlet 314 form a set of matching structures; the number of the matching structures is equal to the number of the thermal management components 2; the number of the matching structures is equal to the number of the thermal management components 2, and the matching structures are in one-to-one correspondence to the thermal management components 2; and in each set of matching structures, the branch inlet 313 is in communication with the refrigerant inlet 21, and the branch outlet 314 is in communication with the refrigerant outlet 22.

The thermal management component 2 may refer to a pipeline component that is in communication with the fluid collecting component 3 to form a refrigerant loop, where the pipeline component may be but is not limited to a flat pipe or a round pipe. Specifically, the refrigerant inlet 21 is in communication with the corresponding branch inlet 313, and the refrigerant outlet 22 is in communication with the corresponding branch outlet 314.

Referring to FIGs. 11 and 12, two thermal management components 2 are provided; the fluid collecting component 3 has two branch inlets 313 and two branch outlets 314 to form two sets of matching structures; and the two sets of matching structures correspond to the two thermal management components 2.

In the above technical solution, a plurality of thermal management components 2 can be in communication with each other through the fluid collecting component 3; and when the plurality of thermal management components 2 are in communication with the fluid collecting component 3, the thermal management components 2 can be arranged side by side. In addition, the installation interference among the plurality of thermal management components 2 can be reduced, and bending avoidance positions on the thermal management components 2 can be reduced. This is conducive to reducing the difficulty in the manufacturing process of the thermal management components 2, and reducing the space occupied by the thermal management components 2.

In a third aspect, as shown in FIG. 2, an embodiment of this application further provides a battery 100 including a thermal management assembly 30.

In the above technical solution, with the thermal management assembly 30 used, the probability of a large temperature difference occurring on the battery 100 can be reduced, and the reliability of the battery 100 can be improved. In addition, with the thermal management assembly 30 used, the space in the battery 100 can also be saved, facilitating the arrangement of components in the battery 100 or the placement of larger-volume components, and helping to reduce the volume of the battery 100, thereby increasing the energy density of the battery 100.

In a fourth aspect, an embodiment of this application further provides an electric apparatus including a thermal management assembly 30 or a battery 100.

The electric apparatus may be but is not limited to a vehicle 1000, a ship, or an aircraft. For example, as shown in FIG. 1, the electric apparatus may be a vehicle 1000.

In the above technical solution, with the thermal management assembly 30 or the battery 100 used, the reliability of the battery 100 used by the electric apparatus may be higher, thereby improving the reliability of the electric apparatus, and helping to improve the safety of the electric apparatus.

It should be noted that, in the absence of conflict, the embodiments in this application and the features in the embodiments can be combined with each other.

The foregoing embodiments are merely preferred embodiments of this application, which are not intended to limit this application. Persons skilled in the art understand that this application may have various modifications and variations. Any modifications, equivalent replacements, improvements, and the like made without departing from the spirit and principle of this application shall fall within the protection scope of this application.

## Claims

1. A fluid collecting component, comprising:
an apparatus body, wherein the apparatus body is provided with a main inlet, a main outlet, a plurality of branch inlets, and a plurality of branch outlets, wherein the plurality of branch outlets are in communication with the main outlet, an extension flow channel is formed inside the apparatus body; one end of the extension flow channel is in communication with the main inlet, and the other end thereof extends toward a side away from the main inlet; one of the plurality of branch inlets is in communication with the main inlet, and the others are in communication with the extension flow channel; the number of the branch inlets is equal to the number of the branch outlets, and the branch inlets are in one-to-one correspondence to the branch outlets; and the branch inlets are adjacent to the corresponding branch outlets.

2. The fluid collecting component according to claim 1, wherein the extension flow channel extends along a length direction of the apparatus body; and the plurality of branch outlets are provided on a same side of the apparatus body in the length direction.

3. The fluid collecting component according to claim 2, wherein at least part of the plurality of branch inlets and the branch outlets are provided on a same side of the apparatus body.

4. The fluid collecting component according to claim 3, wherein part of the plurality of branch inlets and the corresponding branch outlets are provided on two adjacent sides of the apparatus body.

5. The fluid collecting component according to any one of claims 1 to 4, wherein the apparatus body has a height direction; a first communication flow channel is formed between the branch outlet and the main outlet; and the first communication flow channel and the extension flow channel are spaced apart in the height direction.

6. The fluid collecting component according to claim 5, wherein a reference plane perpendicular to the height direction is made; and an orthographic projection of the extension flow channel at least partially overlaps with an orthographic projection of the first communication flow channel on the reference plane.

7. The fluid collecting component according to claim 5 or 6, wherein a second communication flow channel is formed between the main inlet and the one of the plurality of branch inlets that is in communication with the main inlet; and the second communication flow channel and the extension flow channel are located on two sides of the main inlet.

8. The fluid collecting component according to any one of claims 1 to 4, wherein the apparatus body has a width direction; a first communication flow channel is formed between the branch outlet and the main outlet; and the first communication flow channel and the extension flow channel are spaced apart along the width direction.

9. The fluid collecting component according to claim 8, wherein a second communication flow channel is formed between the main inlet and the one of the plurality of branch inlets that is in communication with the main inlet; and the second communication flow channel is provided on a side of the main inlet away from the main outlet and is in communication with the extension flow channel.

10. The fluid collecting component according to claim 8, wherein the apparatus body has a height direction; a second communication flow channel is formed between the main inlet and the one of the plurality of branch inlets that is in communication with the main inlet; the main inlet is in communication with the second communication flow channel along the height direction; a reference plane perpendicular to the height direction is made; and an orthographic projection of the main inlet at least partially overlaps with an orthographic projection of the second communication flow channel on the reference plane.

11. The fluid collecting component according to claim 8, wherein one of the plurality of branch inlets is in communication with the main inlet, and a second communication flow channel is formed between the one of the plurality of branch inlets and the main inlet; the second communication flow channel and the extension flow channel are located on two sides of the main inlet; a first communication hole is formed between the extension flow channel and the main inlet; a second communication hole is formed between the second communication flow channel and the main inlet; and an opening area of the first communication hole is S1, and an opening area of the second communication hole is S2, wherein 0.5 ≤ S1/S2 ≤ 1.5.

12. The fluid collecting component according to claim 11, wherein the apparatus body has a length direction; the extension flow channel extends along the length direction and has a length L1 in the length direction; and the second communication flow channel extends along the width direction and has a length L2 in the width direction; wherein 0.2 ≤ (S1/L1)/(S2/L2) ≤ 5.

13. The fluid collecting component according to claim 12, wherein 0.8 ≤ (S1/L1)/(S2/L2) ≤ 1.2.

14. The fluid collecting component according to any one of claims 8 to 13, wherein a first wall is formed between the main outlet and the extension flow channel; and a size of the first wall in the width direction is 0.5 mm to 2 mm.

15. The fluid collecting component according to any one of claims 1 to 14, wherein two branch inlets and two branch outlets are provided; and the two branch outlets comprise a first branch outlet and a second branch outlet that are provided along the length direction of the apparatus body; a first flow channel is formed between the first branch outlet and the main outlet; a second flow channel is formed between the second branch outlet and the main outlet; a second wall is formed between the first flow channel and the second flow channel; and in the length direction of the apparatus body, a thickness of the second wall is 0.5 mm to 2 mm.

16. The fluid collecting component according to any one of claims 1 to 15, wherein the fluid collecting component further comprises a first connecting pipe and a second connecting pipe; the first connecting pipe is in communication with the main inlet; and the second connecting pipe is in communication with the main outlet.

17. A thermal management assembly, comprising:
at least two thermal management components, wherein the thermal management component has a refrigerant inlet and a refrigerant outlet that are in communication with an internal flow path; and
the fluid collecting component according to any one of claims 1 to 16, wherein each branch inlet and the corresponding branch outlet form a set of matching structures; the number of the matching structures is equal to the number of the thermal management components, and the matching structures are in one-to-one correspondence to the thermal management components; in each set of matching structures, the branch inlet is in communication with the refrigerant inlet, and the branch outlet is in communication with the refrigerant outlet.

18. A battery, comprising the thermal management assembly according to claim 17.

19. An electric apparatus, comprising the thermal management assembly according to claim 17 or the battery according to claim 18.
